# EUROPÄISCHE PATENTSCHRIFT

(11) **EP 1 308 693 B1**
(45) Veröffentlichungstag und Bekanntmachung des Hinweises auf die Patenterteilung: **13.12.2006**
(21) Anmeldenummer: 02023314.4
(22) Anmeldetag: 17.10.2002
(51) Int. Cl.: G01C 3/00, G01S 17/32

(54) **Optoelektronische Entfernungsmesseinrichtung**
Optoelectronic distance measurement device
Dispositif optoélectronique de mesure de distance

(30) Priorität: 29.10.2001 DE 10153270
(43) Veröffentlichungstag der Anmeldung: 07.05.2003
(73) Patentinhaber: SICK AG, 79183 Waldkirch, Breisgau (DE)
(72) Erfinder: Hipp, Johann, 22391 Hamburg (DE)
(74) Vertreter: Manitz, Finsterwald & Partner GbR

(56) Entgegenhaltungen:
- DE-A- 4 108 376
- DE-A- 4 328 553
- US-A- 5 003 191

## Beschreibung

Die Erfindung betrifft eine optoelektronische Entfernungsmesseinrichtung mit wenigstens einer Sendeeinheit zur Aussendung gepulster elektromagnetischer Strahlung, zumindest einer der Sendeeinheit zugeordneten Empfangseinheit zum Empfang der reflektierten Strahlung, und einer Auswerteeinrichtung zur Bestimmung zumindest der Entfernung von die ausgesandte Strahlung reflektierenden Objekten, gemäß Oberbegriff des Anspruchs 1.

Derartige Einrichtungen sind grundsätzlich bekannt, beispielsweise aus DE 4108376 A1, und werden beispielsweise in Verbindung mit Fahrzeugen eingesetzt, um während der Fahrt die Umgebung des Fahrzeugs zu erfassen.

Problematisch ist das Auftreten von Objekten mit stark unterschiedlichen Reflektivitäten, die entsprechend stark variierende Amplituden der Empfangspulse auf der Empfangseinheit zur Folge haben. Ein nahes Objekt hoher Reflektivität wie z.B. ein sogenanntes "Katzenauge" oder ein Fahrbahnbegrenzungspfosten, der auch als kooperatives Ziel bezeichnet wird, einerseits und ein fernes Objekt geringer Reflektivität wie z.B. ein Baum oder eine Person mit dunkler Kleidung andererseits können sich in der Praxis hinsichtlich der Intensität und damit der Empfangssignalamplitude der von ihnen reflektierten Strahlung um einen Faktor 10⁶ oder mehr voneinander unterscheiden.

Eine Empfangseinheit, die einen derart extrem weiten Dynamikbereich abdecken soll, wird bei hohen Intensitäten zwangsläufig übersteuern. Die für eine Entfernungsmessung nach einem Pulslaufzeitverfahren maßgebliche Breite der Empfangspulse ist von der Amplitude der empfangenen Strahlungspulse abhängig. Dieser Zusammenhang kann im nicht übersteuerten oder analogen Bereich, d.h. für eine bestimmte Intensität oder Amplitude nicht überschreitende Strahlungspulse, vergleichsweise unkritisch sein, bei hohen Intensitäten jedoch zu Ungenauigkeiten bei der Entfernungsbestimmung führen, die im Bereich von einigen Metern liegen können.

Im Zusammenhang mit dieser Problematik ist es z.B. bekannt, Verstärker mit logarithmischer Kennlinie zu verwenden, mit denen große Amplituden in einem logarithmischen Maßstab verkleinert reproduziert werden. Von Nachteil ist die hierbei erfolgende Deformation des Pulses, die zu Ungenauigkeiten bei der Entfernungsmessung führen kann, so dass derartige Verstärker lediglich für Anwendungen ohne hohen Genauigkeitsanspruch in Frage kommen.

DE 43 28 553 A1 betrifft ein Entfernungsmessgerät nach dem Laufzeitprinzip und beschreibt verschiedene Methoden zur Verbesserung der Messgenauigkeit.

Aufgabe der Erfindung ist es, ausgehend von einer optoelektronischen Entfernungsmesseinrichtung der eingangs genannten Art eine Möglichkeit zu schaffen, insbesondere bei der Entfernungsbestimmung zumindest solche Ungenauigkeiten, die aufgrund unterschiedlicher Intensitäten der reflektierten Strahlung auftreten, auf ein Minimum zu reduzieren, wobei dies insbesondere über den gesamten in der Praxis auftretenden Dynamikbereich möglich sein soll.

Die Lösung dieser Aufgabe erfolgt durch die Merkmale des Anspruchs 1 und insbesondere dadurch, dass der Empfangseinheit eine Reihenschaltung aus Arbeitswiderständen nachgeschaltet ist und jedem Arbeitswiderstand ein separater Verstärker zur Verstärkung des am jeweiligen Arbeitswiderstand aus einem einlaufenden, sukzessive abgeschwächten Empfangspuls entstandenen Tochterpulses zugeordnet ist.

Erfindungsgemäß wird aus jedem an der Empfangseinheit entstehenden Empfangspuls eine Mehrzahl von hier als Tochterpulse bezeichneten Signalpulsen mit abnehmender Signalhöhe erzeugt, die mit einer Anordnung aus parallelen Verstärkern verstärkt werden, wobei jedem Tochterpuls ein eigener Verstärker zugeordnet ist. Folglich stehen gleichzeitig mehrere parallele Messkanäle zur Verfügung, die sich dadurch unterscheiden, dass die Eingangspulse, nämlich die Tochterpulse, von unterschiedlicher Signalhöhe sind.

In Abhängigkeit von der anfänglichen Signalhöhe eines an der Empfangseinheit erzeugten Empfangspulses entsteht an einem der Arbeitswiderstände ein Tochterpuls, der im Anschluss an seine Verstärkung nicht übersteuert ist, d.h. dessen Signalhöhe unter einer Übersteuerungsschwelle bleibt. Die vor diesem ersten nicht übersteuerten verstärkten Tochterpuls an den vorherigen Arbeitswiderständen entstehenden Tochterpulse erfahren aufgrund ihrer zu einer Übersteuerung führenden Verstärkung eine Pulsverbreiterung, die zu Ungenauigkeiten oder zumindest zu Problemen bei einer nach einem Pulslaufzeitverfahren erfolgenden Entfernungsmessung führen würde. Die Erfindung gestattet es, diese übersteuerten verstärkten Tochterpulse zu unterdrücken und einen nicht übersteuerten verstärkten Tochterpuls einer nachfolgenden Auswertung zuzuführen.

Da erfindungsgemäß eine Mehrzahl von Messkanälen zur Verfügung steht, ist automatisch dafür gesorgt, dass für jede Signalhöhe eines anfänglichen Empfangspulses, d.h. für jede Intensität eines reflektierten Strahlungspulses, ein Messkanal existiert, in dem eine optimale Auswertung des Empfangspulses frei von störenden Übersteuerungseffekten dadurch möglich ist, dass nicht der anfängliche Empfangspuls selbst, sondern ein aus diesem entstandener Tochterpuls ausgewertet wird, der aufgrund der Abschwächung durch einen oder mehrere Arbeitswiderstände eine reduzierte Signalhöhe aufweist, jedoch nach wie vor die für eine Entfernungsmessung nach dem Laufzeitprinzip benötigten Informationen enthält.

Erfindungsgemäß sucht sich der anfängliche Empfangspuls in Abhängigkeit von seiner Signalhöhe gewissermaßen selbst denjenigen Messkanal, in welchem er - in Form eines abgeschwächten, hinsichtlich der benötigten Informationen aber gerade unverfälschten Tochterpulses - problemlos ausgewertet werden kann.

Durch die Erfindung kann folglich ein extrem weiter Dynamikbereich abgedeckt werden. Es können problemlos und ohne Zugeständnisse bei der Genauigkeit und Schnelligkeit der Entfernungsmessung sowohl nahe Ziele mit hohem Reflexionsvermögen als auch ferne Ziele von geringer Reflektivität gemessen werden.

Die erfindungsgemäße Messeinrichtung kann folglich besonders vorteilhaft in Verbindung mit Laserscannern z.B. in den Bereichen Verkehrstechnik, Automobilsensorik und Industrievermessung und insbesondere überall dort eingesetzt werden, wo spezielle Zielmarken hoher Reflektivität einerseits und normale Objekte oder die Umgebung andererseits simultan vermessen werden sollen und hierzu abgetastet werden. Mögliche Anwendungen sind beispielsweise Navigation und Sicherheit bei automatischen Transportfahrzeugen, wenn für die Teilaufgabe "Navigation" ortsbekannte Reflektoren identifiziert werden müssen und für die Teilaufgabe "Sicherheit" auch Objekte mit geringem Reflexionsvermögen nicht übersehen werden dürfen. In Frage kommende Einsatzgebiete sind ferner z.B. Messungen an flüssigen Metallen, wo blanke Metalloberflächen und dunkle Aschebereiche einander in schneller Folge abwechseln.

Die Erfindung gestattet außerdem Reflektivitätsmessungen, indem in Kenntnis der Objektentfernung aus der Signalhöhe eines nicht übersteuerten und daher unverbreiterten verstärkten Tochterpulses auf die Intensität des empfangenen Strahlungspulses und damit auf die Reflektivität des betreffenden Objekts geschlossen wird. Dabei erlauben die bekannten Eigenschaften des betreffenden Messkanals, d.h. der Abschwächungsgrad aufgrund der jeweiligen Arbeitswiderstände und die Kenngrößen des jeweiligen Verstärkers, einen Rückschluss auf die Signalhöhe des anfänglichen Empfangspulses.

Die Erfindung kann in vorteilhafter Weise mit einer Doppelpulsauswertung kombiniert werden, bei der in kurzem zeitlichen Abstand nacheinander einlaufende Empfangspulse desselben von der Sendeeinheit ausgesandten Sendepulses hinsichtlich der Laufzeit ausgewertet werden, um z.B. die Oberkante eines auf dem Boden stehenden Containers getrennt von dem Boden selbst messen zu können. Übersteuerungsbedingte Verbreiterungen der Empfangspulse werden durch die Erfindung vermieden, so dass auch zeitlich eng beieinander liegende Empfangspulse voneinander getrennt werden können und keine Probleme aufgrund von Verformungen oder Unterdrückungen der späteren Empfangspulse durch verbreiterte frühere Empfangspulse auftreten.

Bevorzugt ist vorgesehen, dass die Widerstandswerte der Arbeitswiderstände ausgehend von der Empfangseinheit sukzessive abnehmen.

Ferner sind vorzugsweise die Verhältnisse der Widerstandswerte der Arbeitswiderstände untereinander an die Dynamikbereiche der Verstärker angepasst.

Die Anpassung der Widerstandswerte an die Eigenschaften und insbesondere an die Dynamikbereiche bzw. Verstärkungsfaktoren der Verstärker erfolgt bevorzugt derart, dass eine lückenlose Abdeckung des in der Praxis jeweils erwarteten Dynamik- oder Intensitätsbereiches gewährleistet ist, d.h. für alle innerhalb der Sicht- oder Reichweite der Messeinrichtung befindliche Objekte unabhängig von deren Reflexionsvermögen eine Entfernungsmessung mit hoher Genauigkeit sichergestellt ist.

Besonders bevorzugt ist es, wenn die Widerstandswerte der Arbeitswiderstände derart gewählt sind, dass jeweils der Quotient zweier aufeinander folgender Summen von Widerstandswerten dem Dynamikbereich des nachfolgenden Verstärkers entspricht.

Vorzugsweise ist der Dynamikbereich für alle Verstärker der gleiche.

In einer weiteren bevorzugten praktischen Ausgestaltung der Erfindung ist jedem Verstärker ein Komparator mit einer vorgegebenen Referenzspannung nachgeschaltet, die insbesondere einer jeweiligen Referenzschwelle einer nachgeordneten Selektionseinheit entspricht, mit der die Komparatoren verschaltet sind.

Vorzugsweise ist den Verstärkern eine gemeinsame Selektionseinheit nachgeschaltet, mit der aus den insbesondere parallel einlaufenden verstärkten Tochterpulsen wenigstens ein, vorzugsweise genau ein unterhalb einer Übersteuerungsschwelle bleibender verstärkter Tochterpuls auswählbar und zur Auswertung insbesondere hinsichtlich der Laufzeit an eine nachgeordnete Auswerteeinheit weiterleitbar ist.

Dabei ist bevorzugt vorgesehen, dass die Selektionseinheit den kleinsten eine jeweilige Referenzschwelle überschreitenden verstärkten Tochterpuls auswählt.

Gemäß einer weiteren bevorzugten Ausführung der Erfindung ist die Selektionseinheit derart ausgebildet, dass jeder eine jeweilige Referenzschwelle überschreitende verstärkte Tochterpuls die Auswertung zumindest eines größeren, insbesondere des nächst größeren verstärkten Tochterpulses unterbindet. Hierdurch wird erreicht, dass von allen verstärkten Tochterpulsen lediglich der kleinste die jeweilige Referenzschwelle überschreitende Puls übrig bleibt.

Weitere bevorzugte Ausführungsformen der Erfindung sind auch in den Unteransprüchen, der Beschreibung sowie der Zeichnung angegeben.

Die Erfindung wird im Folgenden beispielhaft unter Bezugnahme auf die Zeichnung beschrieben. Es zeigen:
- Fig. 1: das Schaltbild für eine Empfangseinheit und eine Auswerteeinrichtung einer optoelektronischen Entfernungsmesseinrichtung gemäß einer Ausführungsform der Erfindung, und
- Fig. 2: verstärkte Tochterpulse eines Empfangspulses der optoelektronischen Entfernungsmesseinrichtung von Fig. 1.

Bei der erfindungsgemäßen optoelektronischen Entfernungsmesseinrichtung handelt es sich bevorzugt um einen Laserscanner, der in einer oder mehreren Abtastebenen gepulste elektromagnetische Strahlung in einen Überwachungsbereich aussendet und von im Überwachungsbereich befindlichen Objekten reflektierte Strahlung empfängt. Die Sendeeinheit umfasst als Strahlungsquelle eine Laserdiode und eine Strahlungsumlenkeinrichtung in Form eines rotierenden Spiegels. Der Sichtbereich eines derartigen Scanners beträgt bis zu 360°. Die Empfangseinheit umfasst für jede Abtastebene als Empfänger eine Photodiode, insbesondere eine APD (Avalanche Photo Diode). Innerhalb jeder Abtastebene mißt der Scanner für jede Richtung, in die ein Sendepuls ausgesandt wird, neben der Entfernung zu einem oder mehreren Objekten (worauf im folgenden näher eingegangen wird) auch den Winkel bezogen auf eine vorgegebene Achse. Dabei erfolgt die Entfernungsmessung nach einem Pulslaufzeitverfahren.

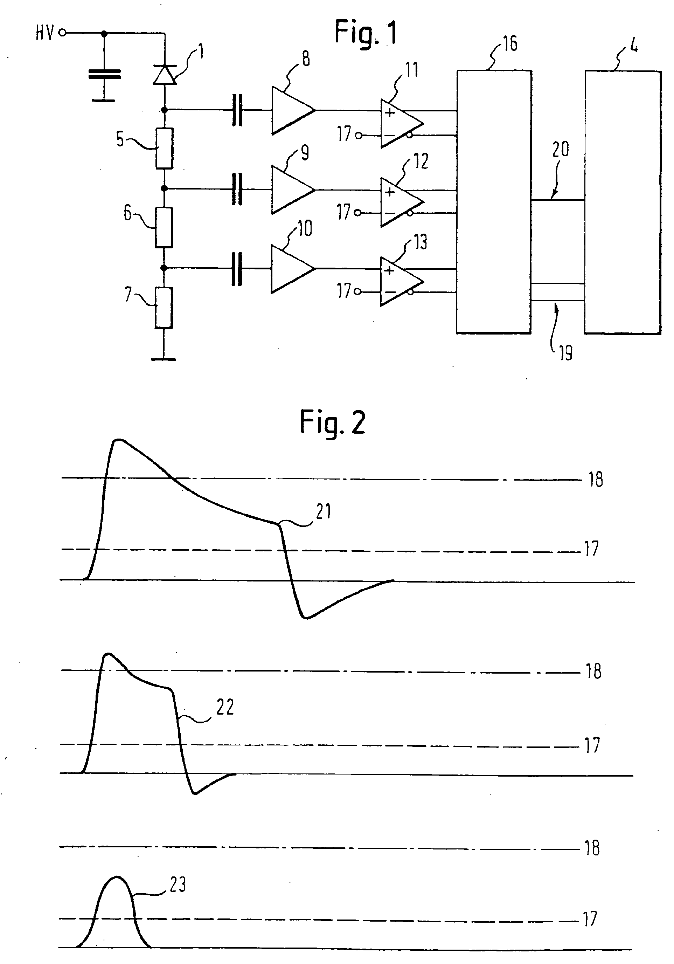

Ein nach Aussendung eines Sendepulses von einem Objekt reflektierter Strahlungspuls erzeugt an der Photodiode 1 (vgl. Fig. 1) einen Empfangspuls, aus dem an jedem Arbeitswiderstand 5, 6, 7 einer der Photodiode 1 nachgeschalteten Widerstandsreihenschaltung ein Tochterpuls entsteht, der mittels eines kapazitiv gekoppelten Verstärkers 8, 9, 10 verstärkt wird.

An jeden Verstärker 8, 9, 10 schließt sich ein Komparator 11, 12, 13 mit einer individuell festgelegten Referenzspannung 17 an, die entsprechend dem in dem betreffenden Messkanal oder -zweig erforderlichen Signal/ Rauschabstand gewählt ist.

Die Widerstandswerte der Arbeitswiderstände 5, 6, 7 nehmen - relativ zum Bezugspotential - ausgehend von der Photodiode 1 ab und sind an die Dynamikbereiche der Verstärker 8, 9, 10 derart angepasst, dass jeweils der Quotient aufeinander folgender Summen von Widerstandswerten dem Dynamikbereich des folgenden Verstärkers entspricht. Bei einem Dynamikbereich von 1/10 beispielsweise werden die Widerstandswerte im Verhältnis 1/10 gewählt, wobei z.B. der größere Widerstandswert 90 Ohm und der kleinere Widerstandswert 10 Ohm beträgt.

Die verstärkten Tochterpulse 21, 22, 23 sind in Fig. 2 gezeigt, wobei der mittels des ersten Verstärkers 8 erzeugte größte Puls 21 und der mittels des zweiten Verstärkers 9 erzeugte mittlere Puls 22 jeweils eine Übersteuerungsschwelle 18 überschreiten und daher eine Verbreiterung erfahren.

Der mittels des dritten Verstärkers 10 erzeugte kleinste Puls 23 überschreitet die Referenzspannung 17, bleibt jedoch unterhalb der Übersteuerungsschwelle 18 und weist daher keine Verbreiterung auf.

Die verstärkten Tochterpulse 21, 22, 23 werden einer gemeinsamen Selektionseinheit 16 zugeführt, die mit den Komparatoren 11, 12, 13 derart verschaltet ist, dass jeder die jeweilige Referenzspannung 17 überschreitende verstärkte Tochterpuls 22, 23 den nächst größeren Puls 21, 22 abschaltet und dadurch dessen Weiterverarbeitung verhindert.

Um die Abschaltung der jeweils größeren Pulse 21, 22 zu gewährleisten, erfolgt in der Selektionseinheit 16 eine entsprechende Verzögerung der einlaufenden Pulse 21, 22, 23.

Hierdurch wird eine Auswertung der übersteuerten verstärkten Tochterpulse 21, 22 verhindert und lediglich der kleinste die jeweilige Referenzschwelle 17 überschreitende verstärkte Tochterpuls 23 einer Auswertung hinsichtlich der Laufzeit zugeführt, wodurch eine Entfernungsmessung mit hoher Genauigkeit erzielt wird.

Der auf diese Weise mittels der Selektionsschaltung 16 ausgewählte Tochterpuls 23 gelangt über eine Leitung 20 an eine Auswerteeinheit 4, in der die Entfernungsbestimmung aus der Pulslaufzeit erfolgt.

Zur Kompensation einen eventuellen unterschiedlichen zeitlichen Verhaltens der Verstärker 8, 9, 10 wird für jeden Verstärker 8, 9, 10 ein individueller Offset-Wert ermittelt und in einem Speicher abgelegt, auf den die Auswerteeinheit 4 zugreifen kann.

Über Steuerleitungen 19 gelangen von der Selektionsschaltung 16 an die Auswerteeinheit 4 Informationen darüber, welcher der verstärkten Tochterpulse 21, 22, 23 zur Auswertung gelangt, d.h. welcher der parallelen Messkanäle ausgewählt wurde, so dass die Auswerteeinheit 4 den Offset-Wert des betreffenden Verstärkers 8, 9, 10 bei der Auswertung berücksichtigen kann.

### Bezugszeichenliste

- 1: Photodiode
- 2: Arbeitswiderstand
- 3: Verstärker
- 4: Auswerteeinheit
- 5, 6, 7: Arbeitswiderstand
- 8, 9, 10: Verstärker
- 11, 12, 13: Komparator
- 16: Selektionseinheit
- 17: Referenzspannung
- 18: Übersteuerungsschwelle
- 19: Steuerleitung
- 20: Kommunikationsleitung
- 21: übersteuerter verstärkter Tochterpuls
- 22: übersteuerter verstärkter Tochterpuls
- 23: nicht übersteuerter verstärkter Tochterpuls

## Patentansprüche

1. Optoelektronische Entfernungsmesseinrichtung, insbesondere Laserscanner, mit
- wenigstens einer Sendeeinheit zur Aussendung gepulster elektromagnetischer Strahlung,
- zumindest einer der Sendeeinheit zugeordneten Empfangseinheit (1), insbesondere einer Photodiode, zum Empfang der reflektierten Strahlung, und
- einer Auswerteeinrichtung (16, 4) zur Bestimmung zumindest der Entfernung von die ausgesandte Strahlung reflektierenden Objekten insbesondere nach einem Pulslaufzeitverfahren,
**dadurch gekennzeichnet,**
**dass** der Empfangseinheit (1) eine Reihenschaltung aus Arbeitswiderständen (5, 6, 7) nachgeschaltet ist und jedem Arbeitswiderstand (5, 6, 7) ein separater Verstärker (8, 9, 10) zur Verstärkung des am jeweiligen Arbeitswiderstand (5, 6, 7) aus einem einlaufenden, sukzessive abgeschwächten Empfangspuls entstandenen Tochterpulses zugeordnet ist.

2. Einrichtung nach Anspruch 1,
**dadurch gekennzeichnet,**
**dass** die Widerstandswerte der Arbeitswiderstände (5, 6, 7) ausgehend von der Empfangseinheit (1) sukzessive abnehmen.

3. Einrichtung nach Anspruch 1 oder 2,
**dadurch gekennzeichnet,**
**dass** die Verhältnisse der Widerstandswerte der Arbeitswiderstände (5, 6, 7) untereinander an die Dynamikbereiche der Verstärker (8, 9, 10) angepasst sind.

4. Einrichtung nach einem der vorhergehenden Ansprüche,
**dadurch gekennzeichnet,**
**dass** die Widerstandswerte der Arbeitswiderstände (5, 6, 7) derart gewählt sind, dass jeweils der Quotient zweier aufeinander folgender Summen von Widerstandswerten dem Dynamikbereich des nachfolgenden Verstärkers (8, 9, 10) entspricht.

5. Einrichtung nach einem der vorhergehenden Ansprüche,
**dadurch gekennzeichnet,**
**dass** der Dynamikbereich für alle Verstärker (8, 9, 10) der gleiche ist.

6. Einrichtung nach einem der vorhergehenden Ansprüche,
**dadurch gekennzeichnet,**
**dass** jedem Verstärker (8, 9, 10) ein Komparator (11, 12, 13) mit einer vorgegebenen Referenzspannung (17) nachgeschaltet ist, die insbesondere einer jeweiligen Referenzschwelle einer nachgeordneten Selektionseinheit (16) entspricht, die mit den Komparatoren (11, 12, 13) verschaltet ist.

7. Einrichtung nach Anspruch 6,
**dadurch gekennzeichnet,**
**dass** für jeden Komparator (11, 12, 13) eine individuelle Referenzspannung (17) vorgesehen ist.

8. Einrichtung nach einem der vorhergehenden Ansprüche,
**dadurch gekennzeichnet,**
**dass** den Verstärkern (5, 6, 7) eine gemeinsame Selektionseinheit (16) nachgeschaltet ist, mit der aus den insbesondere parallel einlaufenden verstärkten Tochterpulsen (21, 22, 23) wenigstens ein, vorzugsweise genau ein unterhalb einer Übersteuerungsschwelle (18) bleibender verstärkter Tochterpuls (23) auswählbar und zur Auswertung insbesondere hinsichtlich der Laufzeit an eine nachgeordnete Auswerteeinheit (4) weiterleitbar ist.

9. Einrichtung nach Anspruch 8,
**dadurch gekennzeichnet,**
**dass** mit der Selektionseinheit (16) der kleinste eine jeweilige Referenzschwelle (17) überschreitende verstärkte Tochterpuls (23) auswählbar ist.

10. Einrichtung nach Anspruch 8 oder 9,
**dadurch gekennzeichnet,**
**dass** die Selektionseinheit (16) derart ausgebildet ist, dass jeder eine jeweilige Referenzschwelle (17) überschreitende verstärkte Tochterpuls (22, 23) die Auswertung zumindest eines größeren, insbesondere des nächst größeren verstärkten Tochterpulses (21, 22) unterbindet.

## Claims

1. An optoelectronic distance measuring device, in particular a laser scanner, comprising
- at least one transmitter unit to transmit pulsed electromagnetic radiation;
- at least one receiver unit (1), in particular a photodiode, associated with the transmitter unit, to receive the reflected radiation; and
- an evaluation unit (16, 4) to determine at least the distance of objects reflecting the transmitted radiation, in particular using the pulse transit time process,
**characterized in that**
a series connection of load resistors (5, 6, 7) is connected after the receiver unit (1) and a separate amplifier (8, 9, 10) is associated with each load resistor (5, 6, 7) to amplify the subsidiary pulse created at the respective load resistor (5, 6, 7) from an incoming, successively attenuated received pulse.

2. A device in accordance with claim 1, **characterized in that** the resistance values of the load resistors (5, 6, 7) reduce successively starting from the receiver unit (1).

3. A device in accordance with claim 1 or claim 2, **characterized in that** the ratios of the resistance values of the load resistors (5, 6, 7) among one another are matched to the dynamic ranges of the amplifiers (8, 9, 10).

4. A device in accordance with any one of the preceding claims, **characterized in that** the resistance values of the load resistors (5, 6, 7) are selected such that the quotient of two successive sums of resistance values in each case corresponds to the dynamic range of the following amplifier (8, 9, 10).

5. A device in accordance with any one of the preceding claims, **characterized in that** the dynamic range is the same for all amplifiers (8, 9, 10).

6. A device in accordance with any one of the preceding claims, **characterized in that** a comparator (11, 12, 13) with a pre-determined reference voltage (17) is connected after each amplifier (8, 9, 10), said reference voltage (17) corresponding in particular to a respective reference threshold of a downstream selection unit (16) which is connected to the comparators (11, 12, 13).

7. A device in accordance with claim 6, **characterized in that** an individual reference voltage (17) is provided for each comparator (11, 12, 13).

8. A device in accordance with any one of the preceding claims, **characterized in that** a common selection unit (16) is connected after the amplifiers (5, 6, 7) with which selection unit at least one amplified subsidiary pulse (23), preferably precisely one amplified subsidiary pulse remaining below an overmodulation threshold (18), can be selected from the incoming amplified subsidiary pulses (21, 22, 23), which are in particular incoming in parallel, and can be forwarded to a downstream evaluation unit (4) for evaluation in particular with regard to the transit time.

9. A device in accordance with claim 8, **characterized in that** the smallest amplified subsidiary pulse (23) exceeding a respective reference threshold (17) can be selected by the selection unit (16).

10. A device in accordance with claim 8 or claim 9, **characterized in that** the selection unit (16) is made such that every amplified subsidiary pulse (22, 23) exceeding a respective reference threshold (17) suppresses the evaluation of at least one larger amplified subsidiary pulse (21, 22), in particular the next larger, amplified subsidiary pulse (21, 22).

## Revendications

1. Dispositif optoélectronique de mesure de distance, en particulier scanner à laser, comprenant :
- au moins une unité émettrice pour émettre un rayonnement électromagnétique pulsé,
- au moins une unité réceptrice (1) associée à l'unité émettrice, en particulier une photodiode, pour la réception du rayonnement réfléchi, et
- une unité d'évaluation (16, 4) pour déterminer au moins la distance vis-à-vis d'objets réfléchissant le rayonnement émis, en particulier d'après un procédé basé sur le temps de parcours des impulsions,
**caractérisé en ce que**
l'unité réceptrice (1) est suivie d'un circuit série formé de résistances de travail (5, 6, 7), et à chaque résistance de travail (5, 6, 7) est associé un amplificateur séparé (8, 9, 10) pour amplifier l'impulsion fille apparaissant au niveau de chaque résistance de travail (5, 6, 7) à partir d'une impulsion reçue entrante avec affaiblissement successif.

2. Dispositif selon la revendication 1,
**caractérisé en ce que** les valeurs de résistance des résistances de travail (5, 6, 7) diminuent successivement en partant de l'unité réceptrice (1).

3. Dispositif selon la revendication 1 ou 2,
**caractérisé en ce que** les rapports des valeurs de résistance des résistances de travail (5, 6, 7) entre elles sont adaptés aux plages de dynamique des amplificateurs (8, 9, 10).

4. Dispositif selon l'une des revendications précédentes,
**caractérisé en ce que** les valeurs de résistance des résistances de travail (5, 6, 7) sont choisies de telle manière qu'à chaque fois le quotient de deux sommes de valeurs de résistance qui se suivent mutuellement correspond à la plage de dynamique de l'amplificateur suivant (8, 9, 10).

5. Dispositif selon l'une des revendications précédentes,
**caractérisé en ce que** la plage de dynamique est la même pour tous les amplificateurs (8, 9, 10).

6. Dispositif selon l'une des revendications précédentes,
**caractérisé en ce que** chaque amplificateur (8, 9, 10) est suivi d'un comparateur (11, 12, 13) avec une tension de référence prédéterminée (17), qui correspond en particulier à un seuil de référence respectif d'une unité de sélection (16) agencée à la suite, qui est mise en circuit avec les comparateurs (11, 12, 13).

7. Dispositif selon la revendication 6,
**caractérisé en ce qu'**il est prévu une tension de référence individuelle (17) pour chaque comparateur (11, 12, 13).

8. Dispositif selon l'une des revendications précédentes,
**caractérisé en ce que** les amplificateurs (5, 6, 7) sont suivis par une unité de sélection commune (16) au moyen de laquelle, parmi les impulsions filles (21, 22, 23) amplifiées entrant en particulier parallèlement, au moins une et de préférence exactement une impulsion fille (23) amplifiée qui reste au-dessous d'un seuil de saturation (18) peut être sélectionnée et peut être transmise à une unité d'évaluation (4) disposée à la suite pour l'évaluation, en particulier pour ce qui concerne le temps de parcours.

9. Dispositif selon la revendication 8,
**caractérisé en ce qu'**avec l'unité de sélection (16) il est possible de choisir l'impulsion fille (23) amplifiée la plus petite qui dépasse un seuil de référence respectif (17).

10. Dispositif selon la revendication 8 ou 9,
**caractérisé en ce que** l'unité de sélection (16) est réalisée de telle manière que chaque impulsion fille (22, 23) amplifiée qui dépasse un seuil de référence respectif (17) interdit l'évaluation d'au moins une impulsion fille (21, 22) plus forte, en particulier de l'impulsion fille présentant la plus grande amplitude suivante.
